(19) Europäisches Patentamt / European Patent Office / Office européen des brevets

(11) **EP 4 585 483 A1**

(12) **EUROPEAN PATENT APPLICATION**
published in accordance with Art. 153(4) EPC

(43) Date of publication:
**16.07.2025   Bulletin 2025/29**

(51) International Patent Classification (IPC):
***B60W 40/064*** (2012.01)

(21) Application number: 24806521.1

(86) International application number:
**PCT/CN2024/092712**

(22) Date of filing: **11.05.2024**

(87) International publication number:
**WO 2024/235169 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **17.05.2023   CN 202310573560**

(71) Applicant: **Chery Automobile Co., Ltd.
Wuhu, Anhui 241006 (CN)**

(72) Inventors:
• **WU, Yifeng
  Wuhu, Anhui 241006 (CN)**
• **QI, Linxing
  Wuhu, Anhui 241006 (CN)**
• **SUN, Lifei
  Wuhu, Anhui 241006 (CN)**

(74) Representative: **Yang, Shu
Withers & Rogers LLP
2 London Bridge
London SE1 9RA (GB)**

(54) **ROAD SURFACE INFORMATION RECOGNITION METHOD AND APPARATUS FOR AUTOMOBILE, AND VEHICLE AND STORAGE MEDIUM**

(57)   The present application relates to a road surface information recognition method and apparatus for an automobile, and a vehicle and a storage medium. The method comprises: collecting travelling data of a vehicle, and determining the current travelling condition of the vehicle on the basis of the travelling data of the vehicle; if the current travelling condition of the vehicle is a first preset condition, calculating a first parameter of a road surface according to the travelling data of the vehicle, and calculating a first adhesion coefficient on the basis of the first parameter and a first preset policy, and if the current travelling condition of the vehicle is a second preset condition, calculating a second parameter of the road surface according to the travelling data of the vehicle, obtaining a second adhesion coefficient on the basis of the second parameter and a second preset policy, and filtering the first adhesion coefficient or the second adhesion coefficient, so as to obtain a final adhesion coefficient value; and using the final adhesion coefficient value as an index to look up a preset standard road condition adhesion coefficient-road condition information relationship table, so as to obtain the current road condition information of the road surface. Thus, hardware costs are reduced, and the recognition accuracy of an adhesion coefficient and the coverage of a travelling condition are also effectively improved.

Acquiring driving data of the vehicle and determining current driving condition of the vehicle based on the driving data of the vehicle — S101

In the case that the current driving condition of the vehicle is a first predetermined condition, calculating a first parameter of a road surface based on the driving data of the vehicle and calculating a first adhesion coefficient based on the first parameter and a first predetermined strategy, or in the case that the current driving condition of the vehicle is a second predetermined condition, calculating a second parameter of the road surface based on the driving data of the vehicle and calculating a second adhesion coefficient based on the second parameter and a second predetermined strategy, and acquiring a final adhesion coefficient value by filtering the first adhesion coefficient or the second adhesion coefficient — S102

Acquiring current road condition information of the road surface by looking up a predetermined relationship table between a standard road condition adhesion coefficient and road condition information based on the final adhesion coefficient value — S103

FIG. 1

EP 4 585 483 A1

# EP 4 585 483 A1

## Description

This application claims priority to Chinese Patent Application No. 202310573560.5, filed on May 17, 2023, and entitled "ROAD SURFACE INFORMATION RECOGNITION METHOD AND APPARATUS FOR AUTOMOBILE, AND VEHICLE AND STORAGE MEDIUM", the contents of which are incorporated herein by reference in its entirety.

## TECHNICAL FIELD

The present disclosure relates to the technical field of all-wheel drive system development, and in particular relates to a method, an apparatus, a vehicle, and a storage medium for identifying road surface information for a vehicle.

## BACKGROUND

As one of the important parameters in an all-wheel drive system, the road surface adhesion coefficient exerts a significant impact on torque distribution of the four-wheel drive system and yaw stability control of the antilock brake system (ABS) as well as other systems for calculating vehicle dynamics. Therefore, research on the identification of road surface adhesion states is of great significance. As scholars at home and abroad have recognized the importance of vehicle driving state parameters for the safety active control system of the vehicle, domestic and overseas enterprises and universities have endeavored to the estimation of vehicle driving state parameters.

In traditional methods, the driving state parameters of the vehicle are mainly measured by sensors, the way to use the instrument to measure although high precision and practicality, but the high measurement cost limits its widespread, and is not suitable for commercial promotion. Therefore, identifying some key vehicle driving state parameters using on-vehicle sensors in combination with algorithms of technologies has become the main research approach.

At present, most of the existing methods for identifying adhesion coefficients are limited to specific conditions, which cannot meet the demand for real-time data updating and have low accuracy, needing to be solved urgently.

## SUMMARY

The present disclosure provide a method, an apparatus, a vehicle, and a storage medium for identifying road surface information for a vehicle, to solve problems in the prior art such as adhesion coefficient estimation being feasible only under specific conditions, inability to meet the demand for real-time data updating, and low accuracy.

In the first aspect, some embodiments of the present disclosure provide a method for identifying road surface information for a vehicle. The method includes: acquiring driving data of the vehicle and determining a current driving condition of the vehicle based on the driving data of the vehicle; in a case where the current driving condition of the vehicle is a first predetermined condition, calculating a first parameter of a road surface based on the driving data of the vehicle and calculating a first adhesion coefficient based on the first parameter and a first predetermined strategy, or in a case where the current driving condition of the vehicle is a second predetermined condition, calculating a second parameter of the road surface based on the driving data of the vehicle and calculating a second adhesion coefficient based on the second parameter and a second predetermined strategy, and acquiring a final adhesion coefficient value by filtering the first adhesion coefficient or the second adhesion coefficient, and acquiring current road condition information of the road surface by looking up a predetermined relationship table between a standard road condition adhesion coefficient and road condition information based on the final adhesion coefficient value.

In some embodiments of the present disclosure, the driving data of the vehicle includes at least one of a vehicle speed, a front-wheel steering angle, a yaw rate, a lateral/longitudinal acceleration, an engine output torque, a gear position, or a slope signal of the vehicle.

In some embodiments of the present disclosure, in the case that the current driving condition of the vehicle is the first predetermined condition, calculating the first parameter of the road surface based on the driving data of the vehicle and calculating the first adhesion coefficient based on the first parameter and the first predetermined strategy includes: calculating a slip rate and a utilization adhesion coefficient of the road surface based on the driving data of the vehicle; fuzzifying the slip rate and the utilization adhesion coefficient and acquiring six first similarity coefficients based on a predetermined fuzzy inference table; and calculating the first adhesion coefficient based on the first similarity coefficient.

In some embodiments of the present disclosure, in the case where the current driving condition of the vehicle is the second predetermined condition, calculating the second parameter of the road surface based on the driving data of the vehicle and calculating the second adhesion coefficient based on the second parameter and the second predetermined strategy includes: calculating an absolute value of a lateral acceleration of the vehicle and an absolute value of a yaw rate deviation of the vehicle based on the driving data of the vehicle; fuzzifying the absolute value of the lateral acceleration and the absolute value of the yaw rate deviation and acquiring a second similarity coefficient based on a predetermined fuzzy inference table; and calculating the second adhesion coefficient based on the second similarity coefficient and a

2

predetermined correction formula.

In some embodiments of the present disclosure, the first adhesion coefficient is calculated by:

$$\lambda_{opt} = \left(k_1\lambda_1 + k_2\lambda_2 + k_3\lambda_3 + k_4\lambda_4 + k_5\lambda_5 + k_6\lambda_6\right)/\left(k_1 + k_2 + k_3 + k_4 + k_5 + k_6\right)$$

wherein $\lambda_{opt}$ is the first adhesion coefficient, $k_{1\sim6}$ are the first similarity coefficients, and $\lambda_{1\sim6}$ are slip rates.

In some embodiments of the present disclosure, the predetermined correction formula is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k)\left|\gamma\frac{a_y}{g}\right|$$

Wherein, $f(k)$ is a correction function, $k$ is the second similarity coefficient, *a, b, c, d are* correction function coefficients, $\mu$ is the second adhesion coefficient, $\gamma$ is a scale factor taken as 1.19, $\boldsymbol{a_y}$ is the lateral acceleration, and $\boldsymbol{g}$ is a gravitational acceleration.

In some embodiments of the present disclosure, subsequent to acquiring the current road condition information of the road surface by looking up the predetermined relationship table between the standard road condition adhesion coefficient and the road condition information based on the final adhesion coefficient value, the method further includes: generating a prompt signal and/or a feedback signal based on the current road condition information; and receiving the prompt signal and/or the feedback signal and feeding back the current road condition information of the road surface to a user in acoustic and/or optical form.

In the second aspect, some embodiments of the present disclosure provide an apparatus for identifying road surface information for a vehicle. The apparatus includes an acquisition module, a calculation module, and a lookup module. The acquisition module is configured to acquire driving data of the vehicle and determine a current driving condition of the vehicle based on the driving data of the vehicle. The calculation module is configured to calculate a first parameter of a road surface based on the driving data of the vehicle and calculate a first adhesion coefficient based on the first parameter and a first predetermined strategy in a case where the current driving condition of the vehicle is a first predetermined condition, or calculate a second parameter of the road surface based on the driving data of the vehicle and calculate a second adhesion coefficient based on the second parameter and a second predetermined strategy in a case where the current driving condition of the vehicle is a second predetermined condition, and acquire a final adhesion coefficient value by filtering the first adhesion coefficient or the second adhesion coefficient. The lookup module is configured to acquire current road condition information of the road surface by looking up a predetermined relationship table between a standard road condition adhesion coefficient and road condition information based on the final adhesion coefficient value.

In some embodiments of the present disclosure, the driving data of the vehicle includes at least one of a vehicle speed, a front-wheel steering angle, a yaw rate, a lateral/longitudinal acceleration, an engine output torque, a gear position, or a slope signal of the vehicle.

In some embodiments of the present disclosure, the calculation module includes: a first calculation unit, a first fuzzy processing unit, and a second calculation unit. The first calculation unit is configured to calculate a slip rate and a utilization adhesion coefficient of the road surface based on the driving data of the vehicle. The first fuzzy processing unit is configured to fuzzify the slip rate and the utilization adhesion coefficient and acquire six first similarity coefficients based on a predetermined fuzzy inference table. The second calculation unit is configured to calculate the first adhesion coefficient based on the first similarity coefficient.

In some embodiments of the present disclosure, the calculation module includes: a third calculation unit, a second fuzzy processing unit, and a correction unit. The third calculation unit is configured to calculate an absolute value of a lateral acceleration of the vehicle and an absolute value of a yaw rate deviation of the vehicle based on the driving data of the vehicle. The second fuzzy processing unit is configured to fuzzify the absolute value of the lateral acceleration and the absolute value of the yaw rate deviation and acquiring a second similarity coefficient based on a predetermined fuzzy inference table. The correction unit is configured to calculate the second adhesion coefficient based on the second similarity coefficient and a predetermined correction formula.

In some embodiments of the present disclosure, the first adhesion coefficient is calculated by:

$$\lambda_{opt} = \left(k_1\lambda_1 + k_2\lambda_2 + k_3\lambda_3 + k_4\lambda_4 + k_5\lambda_5 + k_6\lambda_6\right)/\left(k_1 + k_2 + k_3 + k_4 + k_5 + k_6\right)$$

wherein $\lambda_{opt}$ is the first adhesion coefficient, $k_{1\sim6}$ are the first similarity coefficients, and $\lambda_{1\sim6}$ are slip rates.

In some embodiments of the present disclosure, the predetermined correction formula is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k)\left|\gamma\frac{a_y}{g}\right|$$

Wherein, $f(k)$ is a correction function, $k$ is the second similarity coefficient, *a, b, c, d are* correction function coefficients, $\mu$ is the second adhesion coefficient, $\gamma$ is a scale factor taken as 1.19, $a_y$ is the lateral acceleration, and $g$ is a gravitational acceleration.

In some embodiments of the present disclosure, the calculation module includes: a generation module and a feedback module. The generation module is configured to generate a prompt signal and/or a feedback signal based on the current road condition information. The feedback module is configured to receive the prompt signal and/or the feedback signal and feedback the current road condition information of the road surface to a user in acoustic and/or optical form.

In the third aspect, some embodiments of the present disclosure provide a vehicle. The vehicle includes: a memory, a processor, and a computer program stored on the memory and executable on the processor, wherein the processor, when executing the computer program, is caused to perform the method for identifying the road surface information for the vehicle as described in the above embodiments.

In the fourth aspect, some embodiments of the present disclosure provide a computer-readable storage medium storing a computer program thereon, wherein the computer program, when executed by a processor, causes the processor to perform the method for identifying the road surface information for the vehicle as described in the above embodiments.

As a result, embodiments of the present application have the following beneficial effects:

According to the embodiments of the present disclosure, driving data of the vehicle is acquired and a current driving condition of the vehicle is determined based on the driving data of the vehicle; in the case that the current driving condition of the vehicle is a first predetermined condition, a first parameter of a road surface based on the driving data of the vehicle is calculated and a first adhesion coefficient is calculated based on the first parameter and a first predetermined strategy, or in the case that the current driving condition of the vehicle is a second predetermined condition, a second parameter of the road surface is calculated based on the driving data of the vehicle and a second adhesion coefficient is calculated based on the second parameter and a second predetermined strategy, and a final adhesion coefficient value is acquired by filtering the first adhesion coefficient or the second adhesion coefficient; current road condition information of the road surface is acquired by looking up a predetermined relationship table between a standard road condition adhesion coefficient and road condition information based on the final adhesion coefficient value.

By the method for identifying road surface information for the vehicle provided by embodiments of the present disclosure, there is no need to install additional sensors. Instead, it is only necessary to obtain the driving data of the vehicle through the system inherent in the vehicle to make calculations of the final adhesion coefficient value, thereby saving the hardware costs.

Moreover, when the current driving conditions of the vehicle are different (i.e., the current driving condition of the vehicle may be a first predetermined condition or a second predetermined condition), the corresponding first adhesion coefficient or second adhesion coefficient is obtained by different methods. The methods for calculating the first adhesion coefficient and the second adhesion coefficient are targeted, thereby improving the accuracy of the obtained first adhesion coefficient or the second adhesion coefficient and improving the coverage of the driving conditions.

In summary, while saving hardware costs, the method effectively enhances the identification accuracy of adhesion coefficient and the coverage of driving conditions, thereby solving problems in the prior art such as adhesion coefficient estimation being feasible only under specific driving conditions, inability to meet the demand for real-time data updating, and low accuracy.

The additional aspects and advantages of the present disclosure will be partially set forth in the following description, partially become apparent therefrom, or be understood through the practice of the present disclosure.

## BRIEF DESCRIPTION OF THE DRAWINGS

To describe technical solutions in the embodiments of the present disclosure more clearly, the following briefly introduces the accompanying drawings required for describing the embodiments. Apparently, the accompanying drawings in the following description illustrate merely some embodiments of the present disclosure, and those of ordinary skill in the art may still derive other drawings from these accompanying drawings without creative efforts.

FIG. 1 shows a flowchart of a method for identifying road surface information for a vehicle according to some embodiments of the present disclosure;

FIG. 2 shows a schematic diagram of hardware interaction according to some embodiments of the present disclosure;

FIG. 3 shows a schematic diagram of execution of a method for identifying road surface information for a vehicle according to some embodiments of the present disclosure;

FIG. 4 shows a schematic diagram of a fuzzy identification process of road surface adhesion coefficients under the linear driving condition according to some embodiments of the present disclosure;

FIG. 5 shows a schematic diagram of a partial fuzzy inference rule according to some embodiments of the present disclosure;

FIG. 6 shows a schematic diagram of a fuzzy identification process of road surface adhesion coefficients under the non-linear driving condition according to some embodiments of the present disclosure;

FIG. 7 shows a schematic diagram of execution of a filter processing algorithm according to some embodiments of the present disclosure;

FIG. 8 shows a schematic diagram of execution of another filter processing algorithm provided according to some embodiments of the present disclosure;

FIG. 9 shows a schematic diagram of an apparatus for identifying road surface information for a vehicle according to some embodiments of the present disclosure;

FIG. 10 shows a schematic structural diagram of a vehicle according to some embodiments of the present disclosure.

Wherein, 10-apparatus for identifying road surface information for a vehicle, 100-acquisition module, 200-calculation module, 300-lookup module, 901-memory, 902-processor, 903-communication interface.

## DETAILED DESCRIPTION

Unless otherwise defined, technical or scientific terms used herein shall have the ordinary meaning as understood by those of ordinary skill in the art. Terms "first," "second," "third," and the like used in the specification and claims in the present disclosure do not denote any order, quantity, or importance, but are merely used to distinguish different components. Similarly, the words "a," "an," or similar do not denote a quantitative limitation, but rather indicate the presence of at least one. Terms such as "include" or "comprise" mean that the elements or items appearing before "include" or "comprise" encompass the components or items listed after "includes" or "includes" and their equivalents, without excluding other elements or items. Terms such as "connect" or "be connected" are not limited to physical or mechanical connections, but may include electrical connections, whether direct or indirect. Terms such as "up," "down," "left," and "right" are used only to indicate relative positional relationships, and such relationships may change accordingly when the absolute position of the described object changes.

For clearer descriptions of the technical solutions and advantages of the present disclosure, embodiments of the present disclosure are further described in detail in conjunction with the accompanying drawings.

Embodiments of the present disclosure are described in detail below and are shown in the accompanying drawings, wherein the same or similar reference throughout denotes the same or similar elements or elements having the same or similar functions. The embodiments described below by reference to the accompanying drawings are exemplary, are intended to be used to explain the present disclosure, and are not to be construed as limiting the present disclosure.

The method, apparatus, vehicle, and storage medium of identifying road surface information for a vehicle provided by some embodiments of the present disclosure are described below with reference to the accompanying drawings. To solve the problem mentioned in the above background, the present disclosure provides a method for identifying road surface information for a vehicle. In the method, driving data of the vehicle is acquired and current driving condition of the vehicle is determined based on the driving data of the vehicle; in the case that the current driving condition of the vehicle is a first predetermined condition, a first parameter of a road surface based on the driving data of the vehicle is calculated and a first adhesion coefficient is calculated based on the first parameter and a first predetermined strategy, or in the case that the current driving condition of the vehicle is a second predetermined condition, a second parameter of the road surface is calculated based on the driving data of the vehicle and a second adhesion coefficient is calculated based on the second parameter and a second predetermined strategy, and a final adhesion coefficient value is acquired by filtering the first adhesion coefficient or the second adhesion coefficient; current road condition information of the road surface is

**EP 4 585 483 A1**

acquired by looking up a predetermined relationship table between a standard road condition adhesion coefficient and road condition information based on the final adhesion coefficient value. The present disclosure obtains signals such as vehicle speed, and uses fuzzy rules to calculate and recognize the road surface adhesion coefficients under various conditions such as steering, braking, and straight-line driving, so as to provide clear feedback of the current road condition information of the road surface to the driver in real time, so as to enable the driver to better select the four-wheel-drive operation mode and enhance the driver's perceptual experience. While saving hardware costs, the method effectively enhances the accuracy of adhesion coefficient identification and the coverage of driving conditions. As a result, it solves the problems in the prior art such as adhesion coefficient estimation being feasible only under specific conditions, inability to meet the demand for real-time data updating, and low accuracy.

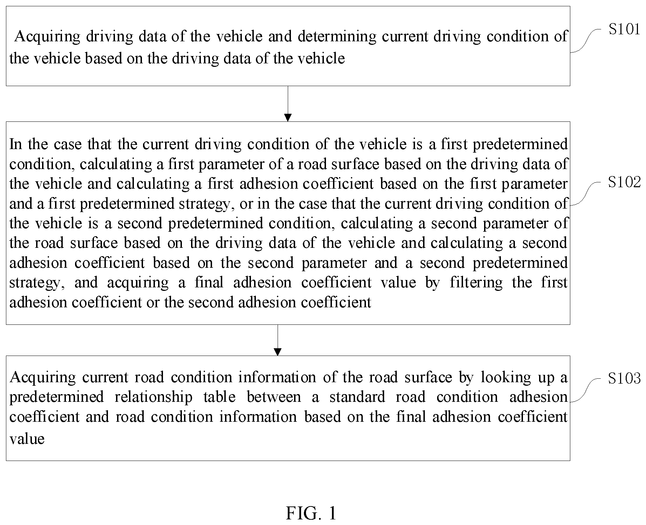

Specifically, FIG. 1 shows a flowchart of a method for identifying road surface information for a vehicle according to some embodiments of the present disclosure.

As shown in FIG. 1, the method for identifying road surface information for the vehicle includes the steps S101 to S103.

In step S101, driving data of the vehicle is acquired and a current driving condition of the vehicle is determined based on the driving data of the vehicle.

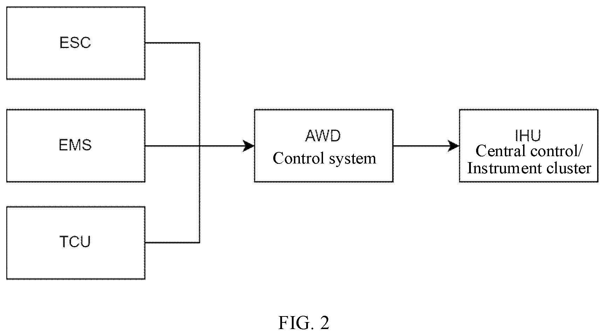

Embodiments of the present disclosure may collect the driving data of the vehicle from a controller area network (CAN) bus through an electronic stability controller (ESC), an engine management system (EMS), a transmission control unit (TCU) system, a signal acquisition/activation module (SAM) from the controller area network (CAN) bus to collect the driving data of the vehicle, and output the collected data to the main four-wheel-drive logic control system, i.e., all-wheel drive (AWD) system. As shown in FIG. 2, the current driving condition of the vehicle such as steering, braking, etc., is determined based on the above data, so as to provide a basis for the subsequent calculation of adhesion coefficients.

In some embodiments of the present disclosure, the driving data of the vehicle includes at least one of a vehicle speed, a front-wheel steering angle, a yaw rate, a lateral/longitudinal acceleration, an engine output torque, a gear position, or a slope signal of the vehicle.

The vehicle speed, lateral/longitudinal acceleration, and gear position may be obtained from the ESC, the front-wheel steering angle and the yaw rate may be obtained from the SAM, the engine output torque may be obtained from the EMS, and the slope signal may be calculated based on the vehicle speed, the front-wheel steering angle, the yaw rate, the lateral/longitudinal acceleration, the engine output torque, and the gear position. In this regard, the driving data is also obtained from other systems, which may be set according to the actual situations, which is not limited by the present disclosure.

In some embodiments of the present disclosure, the driving data of the vehicle received from the CAN bus specifically includes: the vehicle speed, the front-wheel steering angle, the yaw rate, the lateral/longitudinal acceleration, the engine output torque, the gear position, and the slope signal, etc., so as to provide a large amount of reliable data support for subsequent operations such as calculation of the adhesion coefficients and fuzzy identification processing.

In step S102, in the case that the current driving condition of the vehicle is a first predetermined condition, a first parameter of a road surface is calculated based on the driving data of the vehicle and a first adhesion coefficient is calculated based on the first parameter and a first predetermined strategy, or in the case that the current driving condition of the vehicle is a second predetermined condition, a second parameter of the road surface is calculated based on the driving data of the vehicle and a second adhesion coefficient is calculated based on the second parameter and a second predetermined strategy, and a final adhesion coefficient value is acquired by filtering the first adhesion coefficient or the second adhesion coefficient.

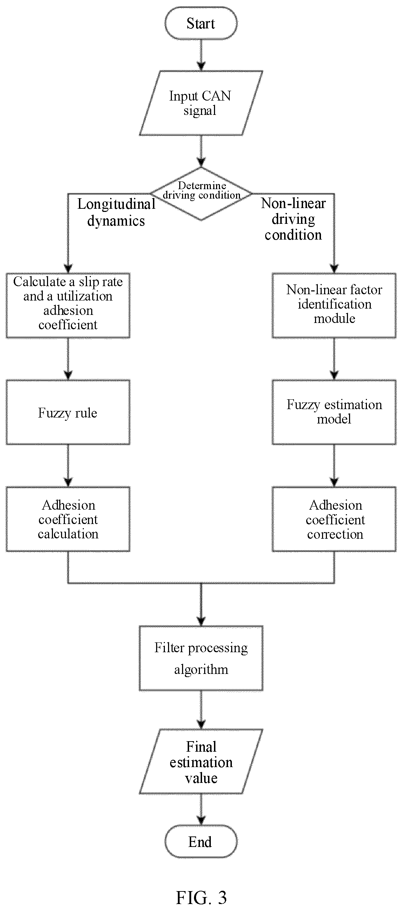

In some embodiments of the present disclosure, the first predetermined condition and the second predetermined condition are linear driving condition (i.e., longitudinal dynamics in FIG. 3) and non-linear driving condition, respectively. Alternatively, the first predetermined condition and the second predetermined condition may be other driving conditions, which is not limited by the present disclosure.

After acquiring the driving data of the vehicle, the embodiments of the present disclosure further determine the current driving condition of the vehicle, such as whether it is a non-linear driving condition, etc., based on the front-wheel steering angle and the yaw rate, so as to calculate the adhesion coefficients by executing the corresponding algorithms based on the different conditions, thereby realizing the precise calculation of the adhesion coefficients under a variety of conditions. The specific execution of calculating the adhesion coefficients is shown in FIG. 3.

In some embodiments of the present disclosure, determining the current driving condition of the vehicle based on the front-wheel steering angle and the yaw rate is as follows: in the case that the front-wheel steering angle is greater than a predetermined front-wheel steering angle threshold and the yaw rate is greater than a predetermined yaw rate threshold, the driving condition of the vehicle is determined as the non-linear driving condition; in the case that the front-wheel steering angle is not greater than the predetermined front-wheel steering angle threshold or the yaw rate is not greater than the predetermined yaw rate threshold, the driving condition of the vehicle is determined as the linear driving condition.

The specific values of the predetermined front-wheel steering angle threshold and the predetermined yaw rate threshold may be set according to requirements and actual situations, which is not limited by the present disclosure.

The method for determining the current driving condition of the vehicle based on the front-wheel steering angle and yaw rate may also employ any other reasonable approach. Alternatively, in addition to relying on the front-wheel steering angle and yaw rate, the current driving condition may be determined using any other reasonable method, which is not limited by the present disclosure.

In some embodiments of the present disclosure, in the case that the current driving condition of the vehicle is the first predetermined condition, calculating the first parameter of the road surface based on the driving data of the vehicle and calculating the first adhesion coefficient based on the first parameter and the first predetermined strategy includes: calculating a slip rate and a utilization adhesion coefficient of the road surface based on the driving data of the vehicle; fuzzifying the slip rate and the utilization adhesion coefficient and acquiring six first similarity coefficients based on a predetermined fuzzy inference table; and calculating the first adhesion coefficient based on the first similarity coefficients.

It should be noted that when the current driving condition of the vehicle is linear driving condition (that is, the first predetermined condition is linear driving condition), such as straight-line driving or braking, the embodiments of the present disclosure may utilize the longitudinal dynamics algorithm to calculate the slip rate and the utilization adhesion coefficient by means of the received driving data of the vehicle. Then, the first parameters (including the slip rate and the utilization adhesion coefficient) are fuzzified, and reasoning is carried out through the fuzzy inference table. Finally, after defuzzification, the first similarity coefficients of six standard road surfaces are acquired, which are calculated accordingly so as to acquire the first adhesion coefficient in the driving condition.

That is, when the first predetermined condition is linear driving condition, the longitudinal dynamics algorithm is utilized to calculate the slip rate and the utilization adhesion coefficient based on the acquired driving data of the vehicle. Then, the slip rate and the utilization adhesion coefficient are fuzzified to obtain the fuzzified slip rate and the fuzzified utilization adhesion coefficient. Next, six first similarity coefficients are obtained based on the fuzzified slip rate, the fuzzified utilization adhesion coefficient, and the predetermined fuzzy inference table. These six first similarity coefficients represent the similarity between the current road surface and six standard road surfaces. After obtaining the six first similarity coefficients, the first adhesion coefficient is calculated based on these six first similarity coefficients.

The process of calculating the adhesion coefficient by longitudinal dynamics is described by the embodiments of the present disclosure as follows:

1. Calculate the slip rate and utilization adhesion coefficient by the following formula:

$$\lambda_i = \frac{v_{wheel} - v_{vehicle}}{v_{wheel}}$$

$$\mu_i = \frac{F_{xi}}{\mu F_{zi}}$$

Where $\lambda_i$ is the slip rate, $v_{wheel}$ is the wheel speed of the vehicle, $v_{vehicle}$ is the driving speed of the vehicle, $\mu_i$ is the utilization adhesion coefficient, $F_{xi}$ is the ground braking force generated by the axle $i$ (when $i$=1, the axle $i$ represents the front axle of the vehicle; when $i$=2, the axle $i$ represents the rear axle of the vehicle), $\mu$ is the adhesion coefficient of the previous moment (the previous moment is also interpreted as the previous cycle), and $F_{zi}$ is the normal counterforce of the ground on the axle $i$ (or the so-called normal reaction force).

It should be understood that $i$ in the above formulas $\lambda_i$ and $\mu_i$ differs in meaning from $i$ in the above formulas $F_{xi}$ and $F_{zi}$, and $i$ in the above formulas $\lambda_i$ and $\mu_i$ represents the cycle index. Whenever a new cycle begins, the wheel speed of the vehicle $v_{wheel}$, the driving speed of the vehicle $v_{vehicle}$, the ground braking force $F_{xi}$ generated by the axle $i$ and the normal counterforce $F_{zi}$ of the ground on the axle $i$ are obtained as well as the adhesion coefficient $\mu$ calculated for the previous cycle. Based on the acquired data, the slip rate $\lambda_i$ and utilization adhesion coefficient $\mu_i$ corresponding to the current cycle are then calculated.

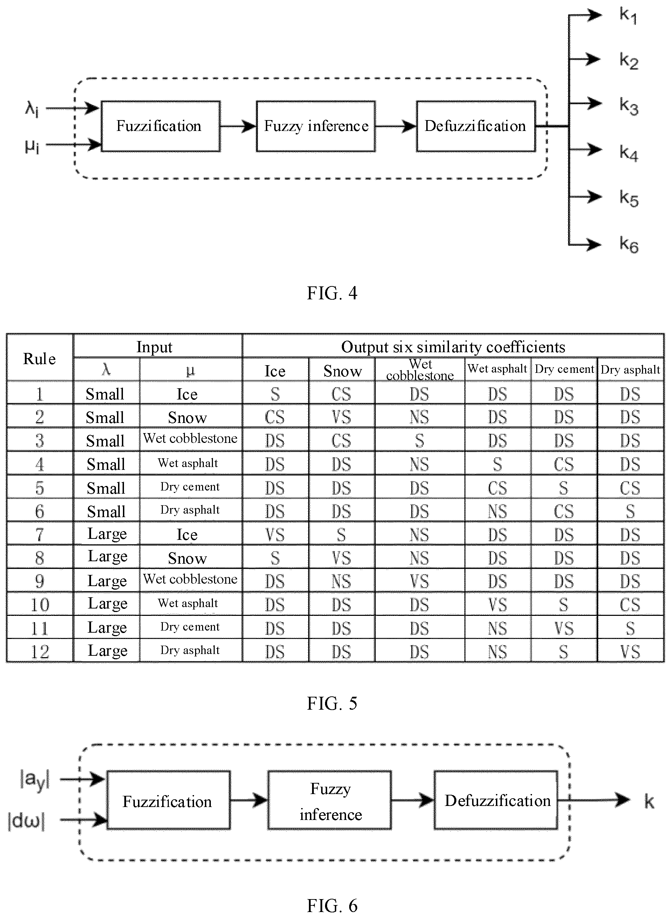

2. Take the slip rate and the utilization adhesion coefficient as the input variables of the fuzzy control, with $k_{1\sim6}$ as the output variables. Calculate the final adhesion coefficient value of the road surface through the corresponding formula, as shown in FIG. 4.

3. Transform the output of the fuzzy inference to obtain a clear control output, that is, a specific numerical value representing the similarity to six standard road surface curves. Some of the fuzz inference rules are shown in FIG. 5.

In some embodiments, regarding the above points 2 and 3, the processing method may be as follows: first, the slip rate $\lambda_i$ and the utilization adhesion coefficient $\mu_i$ corresponding to the current cycle are fuzzified to obtain the fuzzified slip rate $\lambda_i$ and the fuzzified utilization adhesion coefficient $\mu_i$. Then, six fuzzy similarity coefficients are obtained by processing the fuzzified slip rate $\lambda_i$ and the fuzzified utilization adhesion coefficient $\mu_i$ based on predetermined fuzzy inference table, these six fuzzy similarity coefficients represent the similarity between the current road surface and six standard road surfaces. Next, the defuzzification is performed on these six fuzzy similarity coefficients to obtain six first similarity coefficients $k_1$, $k_2$, $k_3$, $k_4$, $k_5$, $k_6$. Finally, the first adhesion coefficient is calculated based on the obtained six first similarity coefficients and the predetermined calculation formula for the first adhesion coefficient.

The method for fuzzifying the slip rate $\lambda_i$ may be as follows: the slip rate $\lambda_i$ corresponding to the current cycle is classified based on the predetermined slip rate threshold. If the slip rate $\lambda_i$ corresponding to the current cycle is greater than or equal to the slip rate threshold, it is classified as "large"; if the slip rate $\lambda_i$ corresponding to the current cycle is less than the slip rate threshold, it is classified as "small".

In some embodiments of the present disclosure, the slip rate threshold is any reasonable value, which is set according to requirements and actual situations and is not limited by the present disclosure.

The method for fuzzifying the utilization adhesion coefficient $\mu_i$ may be as follows: the utilization adhesion coefficient $\mu_i$ corresponding to the current cycle is classified based on the predetermined utilization adhesion coefficient threshold and the predetermined utilization adhesion coefficient range corresponding to each standard road surface. In this way, the initial standard road surface corresponding to the utilization adhesion coefficient $\mu_i$ of the current cycle is determined, thereby a standard road surface (i.e., the initial standard road surface) that is relatively similar to the current road surface being preliminarily identified based on the utilization adhesion coefficient $\mu_i$ of the current cycle. Among them, the six standard road surfaces include ice, snow, wet cobblestone, wet asphalt, dry cement, and dry asphalt. The types and quantities of standard road surfaces may be reasonably adjusted according to requirements and actual situations, which are not limited by the present disclosure.

In some embodiments of the present disclosure, the utilization adhesion coefficient threshold is any reasonable value, which is set according to requirements and actual situations and is not limited by the present disclosure.

The method of processing the fuzzified slip rate $\lambda_i$ and the fuzzified utilization adhesion coefficient $\mu_i$ based on the predetermined fuzzy inference table to obtain the six fuzzy similarity coefficients may be as follows: referring to the predetermined fuzzy inference table shown in FIG. 5 (it can be understood that the "λ" in the "Input" shown in FIG. 5 is the aforementioned $\lambda_i$, and "$\mu$" in the "Input" is the aforementioned $\mu_i$), and the six fuzzy similarity classifications are determined based on the individual correspondences in the predetermined fuzzy inference table, the fuzzified slip rate $\lambda_i$ and the fuzzified utilization adhesion coefficient $\mu_i$, wherein the fuzzy similarity classifications may be DS, NS, CS, S, and VS. DS represents dissimilar, NS represents generally similar, CS represents relatively similar, S represents similar, and VS represents very similar.

For example, when λ is large and $\mu$ is snow, the fuzzy similarity classifications between the current road surface and the six standard road surfaces, namely ice, snow, wet cobblestone, wet asphalt, dry concrete, and dry asphalt, are S, VS, NS, DS, DS, and DS, respectively.

As another example, when λ is small and $\mu$ is wet asphalt, the fuzzy similarity classifications between the current road surface and the six standard road surfaces, namely, ice, snow, wet cobblestone, wet asphalt, dry cement, and dry asphalt, are DS, DS, NS, S, CS, and DS, respectively.

The method for performing defuzzification on these six fuzzy similarity classifications to obtain six first similarity coefficients may be as follows: based on the predetermined correspondence between fuzzy similarity classifications and similarity coefficients and the six fuzzy similarity classifications as obtained, the similarity coefficients corresponding to the six fuzzy similarity classifications are derived, that is, six first similarity coefficients are obtained.

Thus, embodiments of the present disclosure calculate the road surface adhesion coefficient under the linear driving conditions (i.e., the first adhesion coefficient under the linear driving condition) by means of the longitudinal dynamics algorithm, thereby reducing the calculation cost of the adhesion coefficient and improving the efficiency and accuracy of the calculation.

In some embodiments of the present disclosure, the first adhesion coefficient is calculated by:

$$\lambda_{opt} = \left(k_1\lambda_1 + k_2\lambda_2 + k_3\lambda_3 + k_4\lambda_4 + k_5\lambda_5 + k_6\lambda_6\right)\big/\left(k_1 + k_2 + k_3 + k_4 + k_5 + k_6\right)$$

Where $\lambda_{opt}$ is the first adhesion coefficient, $k_{1\sim6}$ are six first similarity coefficients obtained above, and $\lambda_{1\sim6}$ are slip rates corresponding to the latest six consecutive cycles.

After obtaining parameters such as the slip rate and the utilization adhesion coefficient, the embodiments of the present disclosure may use the slip rate and the utilization adhesion coefficient as the input variables of the fuzzy control to calculate the final value of the road surface adhesion coefficient through the following formula:

$$\lambda_{opt} = \left(k_1\lambda_1 + k_2\lambda_2 + k_3\lambda_3 + k_4\lambda_4 + k_5\lambda_5 + k_6\lambda_6\right)\big/\left(k_1 + k_2 + k_3 + k_4 + k_5 + k_6\right)$$

Where $\lambda_{opt}$ is the first adhesion coefficient, $k_{1\sim6}$ are first similarity coefficients, and $\lambda_{1\sim6}$ are slip rates.

Thus, the embodiments of the present disclosure calculates the road surface adhesion coefficient from parameters such as the similarity coefficient and the slip rate, thereby providing guidance and basis for the subsequent use and prompt of the adhesion coefficient.

In some embodiments of the present disclosure, in the case where the current driving condition of the vehicle is the second predetermined condition, calculating the second parameter of the road surface based on the driving data of the vehicle and calculating the second adhesion coefficient based on the second parameter and the second predetermined strategy includes: calculating an absolute value of a lateral acceleration of the vehicle and an absolute value of a yaw rate deviation of the vehicle based on the driving data of the vehicle; fuzzifying the absolute value of the lateral acceleration and the absolute value of the yaw rate deviation and acquiring a second similarity coefficient based on a predetermined fuzzy inference table; and calculating the second adhesion coefficient based on the second similarity coefficient and a predetermined correction formula.

When the current driving condition of the vehicle is a non-linear driving condition, the embodiments of the disclosure may utilize a non-linear dynamics algorithm to calculate the road surface adhesion coefficient under the driving condition. That is, when the second predetermined condition is non-linear driving condition, the second adhesion coefficient is calculated through the non-linear dynamics algorithm.

The process of calculating the road surface adhesion coefficient under the non-linear driving condition is described by the embodiments of the present disclosure as follows:

1. Calculate the absolute value of the yaw rate deviation by the following formula:

$$\omega_{t,s} = \frac{v_x/l}{1 + \frac{mv_x^2}{l^2}\left(\frac{l_f}{C_r} - \frac{l_r}{C_f}\right)}\delta_f$$

$$\omega_t = \frac{1}{0.15s + 1}\omega_{t,s}$$

$$|d\omega| = |\omega_t - \omega|$$

Where $\omega_{t,s}$ is the steady-state yaw rate, $\omega_t$ is the corrected yaw rate, $|d\omega|$ is the absolute value of the yaw rate deviation, $v_x$ the vehicle speed, $l$ is the wheelbase, $m$ is the vehicle mass, $l_f$ and $l_r$ are the front and rear wheel treads (i.e., $l_f$ is the front-wheel tread and $l_r$ is the rear-wheel tread), $\omega$ is the actual yaw rate, $C_f$ and $C_r$ are the front and rear axle side deflections (i.e., $C_f$ is the front-axle side deflection and $C_r$ is the rear-axle side deflection).

2. Take the absolute value of the lateral acceleration $a_y$ and the absolute value of the yaw rate deviation $|d\omega|$ as the input variables for the fuzzy rules, with $k$ as the output variable (i.e., the second similarity coefficient). Calculate the second adhesion coefficient through the predetermined correction formula, as shown in FIG. 6.

In some embodiments, after obtaining the absolute value of the lateral acceleration $a_y$ and the absolute value of the yaw rate deviation $|d\omega|$, the method for calculating the second similarity coefficient may be as follows: referring to FIG. 6, first, fuzzification is performed on the lateral acceleration $a_y$ and the absolute value of the yaw rate deviation $|d\omega|$ respectively to obtain the fuzzified absolute value of the lateral acceleration $a_y$ and the fuzzified absolute value of the yaw rate deviation $|d\omega|$. Then, a fuzzy similarity classification is obtained by processing the fuzzified absolute value of the lateral acceleration $a_y$ and the fuzzified absolute value of the yaw rate deviation $|d\omega|$ based on predetermined fuzzy inference table. Next, the defuzzification is performed on the fuzzy similarity classification to obtain the second similarity coefficient $k$. Finally, the second adhesion coefficient is calculated based on the obtained second similarity coefficient and the predetermined correction formula.

Thus, the embodiments of the present disclosure calculate the absolute value of the lateral acceleration and the absolute value of the yaw rate deviation from the received parameters, fuzzify these parameters, derive the second similarity coefficient through reasoning using the fuzzy inference table, and then calculate the second adhesion coefficient through the correction formula, thereby achieving accurate calculation of the road surface adhesion coefficient under the non-linear driving condition.

In some embodiments of the present disclosure, the predetermined correction formula is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k) \left| \gamma \frac{a_y}{g} \right|$$

$f(k)$ is a correction function, $k$ is the second similarity coefficient, $a, b, c, d$ are correction function coefficients, $\mu$ is the road surface adhesion coefficient (i.e., the second adhesion coefficient), $\gamma$ is a scale factor taken as 1.19, $a_y$ is the lateral acceleration, and $g$ is a gravitational acceleration.

It should be noted that the formula for calculating the road surface adhesion coefficient for the non-linear driving condition in the embodiments of the present disclosure is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k) \left| \gamma \frac{a_y}{g} \right|$$

$f(k)$ is a correction function, $k$ is the second similarity coefficient, $a, b, c, d$ are correction function coefficients which can be -2.2, 3.2, -2.1, 2, $\mu$ is the road surface adhesion coefficient, is a scale factor taken as 1.19, $a_y$ is the lateral acceleration, and $g$ is a gravitational acceleration.

The values of $a, b, c, d$ and $\gamma$ may be reasonably set according to requirements and actual situations, which are not limited by the present disclosure.

Thus, the embodiments of the present disclosure use the fuzzy rules of the AWD system calculation module to identify linear factors and non-linear factors under different driving conditions, such that the estimation value of the adhesion coefficient corresponding to the current driving condition of the vehicle is calculated. Therefore, the embodiments of the present disclosure do not require additional hardware devices such as sensors, effectively reducing the identification cost of adhesion coefficients and improving the calculation accuracy of adhesion coefficients.

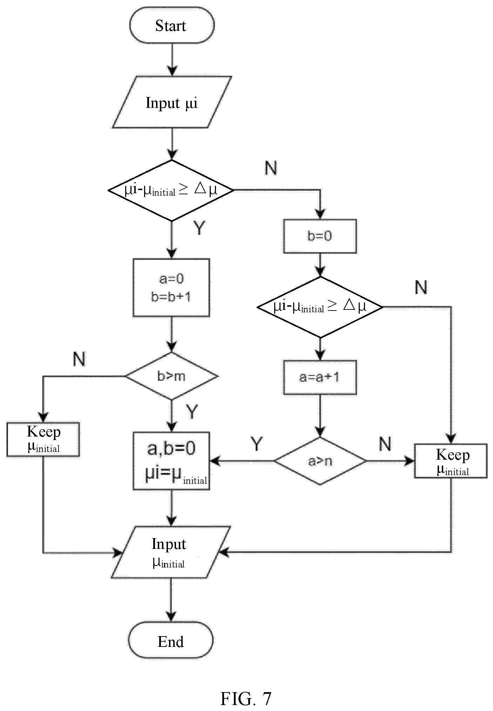

After obtaining the road surface adhesion coefficient under the corresponding driving condition of the vehicle, the embodiments of the present disclosure may further filter the adhesion coefficients of the road surface under different driving conditions by a corresponding filtering algorithm to obtain the final adhesion coefficient values under different conditions, as shown in FIG. 7. the sensitivity of the filtering algorithm is adjusted by changing the magnitudes of the corresponding coefficients so as to effectively improve the accuracy and the anti-interference of the estimation on the road surface adhesion coefficients.

In some embodiments, the method of acquiring the final adhesion coefficient value by filtering the first adhesion coefficient or the second adhesion coefficient may be as follows.

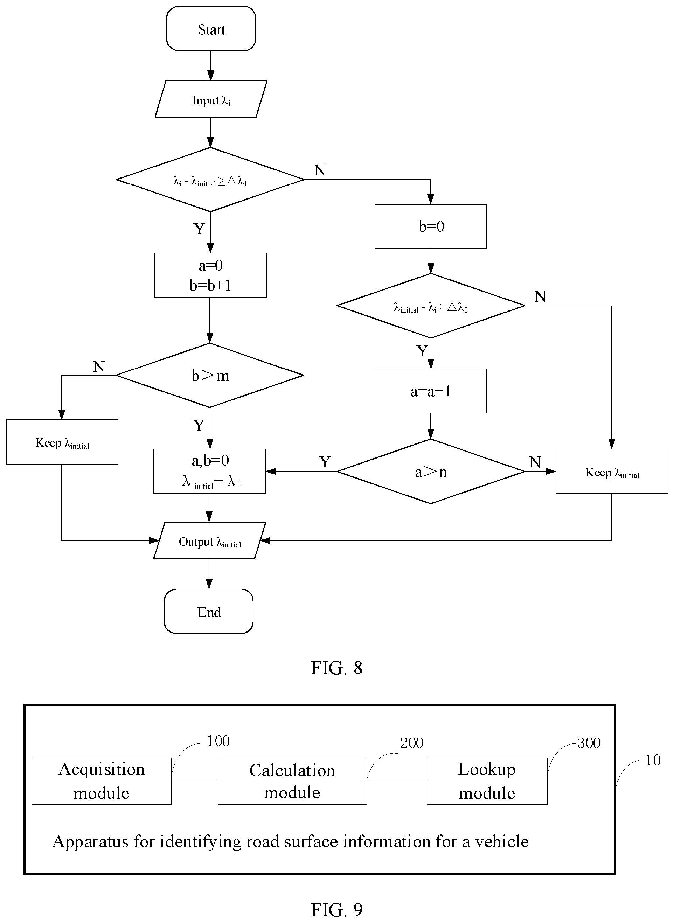

As shown in FIG. 8, $\lambda_i$ is first input, $\lambda_i$ is the road surface adhesion coefficient corresponding to the current cycle (i.e., it can be the first adhesion coefficient calculated for the current cycle or the second adhesion coefficient calculated for the current cycle).

Then, the difference between $\lambda_i$ and $\lambda_{initial}$ is calculated, and whether the difference is greater than or equal to the preset $\triangle\lambda_1$ is determined. Here, $\lambda_{initial}$ is the final adhesion coefficient value determined in the previous cycle, and $\triangle\lambda_1$ is a predetermined and stored positive value.

When the calculated difference is greater than or equal to $\triangle\lambda_1$, it indicates that the value $\lambda_i$ has changed significantly compared to the final adhesion coefficient value $\lambda_{initial}$ in the previous cycle. The reason for such a significant change may be due to a change in road conditions or a large error in the calculated road surface adhesion coefficient (e.g., large errors in the acquired driving data of the vehicle or calculation errors in the process of calculating the road surface adhesion coefficient).

To avoid large errors in the obtained road surface adhesion coefficient, the value of a is kept still zero, and the value of b is added to the value of one, and then whether b is greater than the predetermined value of m is determined, the predetermined value of m is a positive integer and represents the number of times the value of $\lambda_i$ is judged. When b becomes greater than m, it can be considered that after (m+1) consecutive judgments, the differences between $\lambda_i$ and $\lambda_{initial}$ in the (m+1) cycles are all greater than or equal to $\triangle\lambda_1$, it indicates that the reason for the difference being greater than or equal to $\triangle\lambda_1$ is not an error but a change in road conditions. At this time, the $\lambda_i$ corresponding to the current cycle is assigned to $\lambda_{initial}$, and then $\lambda_{initial}$ is output to obtain the final adhesion coefficient value. When b is less than or equal to m, it means there is still a potential for error. In this case, the final adhesion coefficient value $\lambda_{initial}$ of the previous cycle is directly output as the final adhesion coefficient value corresponding to the current cycle.

When the calculated difference between $\lambda_i$ and $\triangle\lambda_1$ is less than $\triangle\lambda_1$, it indicates that the value of $\lambda_i$ has not changed significantly compared to the final adhesion coefficient value $\lambda_{initial}$ of the previous cycle. The reason could be that the calculated $\lambda_i$ is accurate, or the value of $\lambda_i$ is less than $\lambda_{initial}$ resulting in a negative difference. To distinguish the two reasons and ensure the accuracy of the final adhesion coefficient value, b is set to zero, and then the difference between $\lambda_{initial}$ and $\lambda_i$ is calculated, and whether the difference is greater than or equal to the preset $\triangle\lambda_2$ is determined. Here, $\triangle\lambda_2$ is a predetermined and stored positive number. $\triangle\lambda_2$ may be equal to, greater than, or less than $\triangle\lambda_1$, which is not limited by the present disclosure.

Then, the value of a is added to the value of one and then whether a is greater than the preset value of n is determined, the preset value of n is a positive integer and represents the number of times that the value of $\lambda_i$ less than $\lambda_{initial}$ is judged. The value of n may be equal to, greater than, or less than m, and the embodiments of this application do not limit this. When a becomes greater than n, it can be considered that after n+1 consecutive judgments, the differences between $\lambda_{initial}$ and $\lambda_i$ in these (n+1) cycles are all greater than or equal to $\triangle\lambda_2$, it indicates that the reason for the difference being greater than or equal to $\triangle\lambda_2$ is not an error but a change in road conditions. At this time, the $\lambda_i$ corresponding to the current cycle is assigned to $\lambda_{initial}$, and then $\lambda_{initial}$ is output to obtain the final adhesion coefficient value. When a is less than or equal to n, it means there is still a potential for error. In this case, the final adhesion coefficient value $\lambda_{initial}$ of the previous cycle is directly output as the final adhesion coefficient value corresponding to the current cycle.

Through the above filtering process, it is possible to avoid the problem of large errors in the obtained road surface adhesion coefficient caused by inaccurate acquisition of driving data or calculation errors. This improves the accuracy of the final adhesion coefficient value and enhances the accuracy of identifying vehicle road surface information.

In some embodiments of the present disclosure, the method for filtering the first adhesion coefficient or the second adhesion coefficient can also be any other reasonable method, which is not limited by the present disclosure.

In step S103, current road condition information of the road surface is acquired by looking up a predetermined relationship table between a standard road condition adhesion coefficient and road condition information based on the final adhesion coefficient value.

After obtaining the final adhesion coefficient value of the road surface under different road conditions, the embodiments of the present disclosure further compare the final adhesion coefficient value with the predetermined relationship table between the standard road condition adhesion coefficient and road condition information to obtain the current road condition information of the road surface. The identified current road condition information is sent to the infotainment head unit (IHU), and the driver is prompted via the central control screen to switch the AWD mode or select automatic switching, thereby improving the reliability and user-friendliness of the vehicle.

In some embodiments of the present disclosure, after acquiring the current road condition information of the road surface by looking up the predetermined relationship table between the standard road condition adhesion coefficient and the road condition information based on the final adhesion coefficient value includes: generating a prompt signal and/or a feedback signal based on the current road condition information; receiving the prompt signal and/or the feedback signal and feeding back the current road condition information of the road surface to a user in acoustic and/or optical form.

After obtaining the current road condition information of the road surface, the embodiments of the present disclosure may generate corresponding prompt signal and feedback signal based on the information. When the vehicle receives the signals, the AWD system receives the signal and uses them to allocate front-rear torque, determines whether the current driving mode matches the identified road conditions. If there is a mismatch, a prompt message such as "Recommend switching driving mode or enabling automatic mode switching" is sent to the IHU central control or instrument cluster in the form of a pop-up window. The driver can click a button on the central control screen to choose whether to enable automatic mode switching, manually switch modes, or ignore the reminder. Additionally, the embodiments of the present disclosure may send relevant voice reminder feedback through voice devices.

The embodiments of the present disclosure meet the requirement for road surface adhesion coefficient identification in all-wheel drive torque distribution by identifying the road surface adhesion coefficient, and the identified coefficient may also serve as input for other systems requiring road surface adhesion coefficient. Additionally, the embodiments of the present disclosure provide clear real-time feedback to the driver regarding the current road surface identification information, enabling the driver to better select the AWD operating mode and enhancing the overall driving experience.

According to the method for identifying road surface information for a vehicle provided by the embodiments of the present disclosure, driving data of the vehicle is acquired and a current driving condition of the vehicle is determined based on the driving data of the vehicle; in the case that the current driving condition of the vehicle is a first predetermined condition, a first parameter of a road surface based on the driving data of the vehicle is calculated and a first adhesion coefficient is calculated based on the first parameter and a first predetermined strategy, and in the case that the current driving condition of the vehicle is a second predetermined condition, a second parameter of the road surface is calculated based on the driving data of the vehicle and a second adhesion coefficient is calculated based on the second parameter and a second predetermined strategy, and a final adhesion coefficient value is acquired by filtering the first adhesion coefficient or the second adhesion coefficient; current road condition information of the road surface is acquired by looking up a predetermined relationship table between a standard road condition adhesion coefficient and road condition information based on the final adhesion coefficient value.

By the method for identifying road surface information for the vehicle provided by embodiments of the present disclosure, there is no need to install additional sensors. Instead, it is only necessary to obtain the driving data of the vehicle through the system inherent in the vehicle to make calculations of the final adhesion coefficient value, thereby saving the hardware costs.

Moreover, when the current driving conditions of the vehicle are different (i.e., the current driving condition of the vehicle may be a first predetermined condition or a second predetermined condition), the corresponding first adhesion coefficient or second adhesion coefficient is obtained by different methods. The methods for calculating the first adhesion coefficient and the second adhesion coefficient are targeted, thereby improving the accuracy of the obtained first adhesion coefficient or the second adhesion coefficient and improving the coverage of the driving conditions.

In summary, while saving hardware costs, the method effectively enhances the identification accuracy of adhesion coefficient and the coverage of driving conditions.

Next, an apparatus for identifying road surface information for a vehicle according to embodiments of the present disclosure is described with reference to the accompanying drawings.

FIG. 9 shows a schematic diagram of an apparatus for identifying road surface information for a vehicle according to some embodiments of the present disclosure.

As shown in FIG. 9, the apparatus 10 of identifying road surface information for the vehicle includes: an acquisition module 100, a calculation module 200, and a lookup module 300.

The acquisition module 100 is configured to acquire driving data of the vehicle and determine a current driving condition of the vehicle based on the driving data of the vehicle.

The calculation module 200 is configured to calculate a first parameter of a road surface based on the driving data of the vehicle and calculate a first adhesion coefficient based on the first parameter and a first predetermined strategy in a case where the current driving condition of the vehicle is a first predetermined condition, and calculate a second parameter of the road surface based on the driving data of the vehicle and calculate a second adhesion coefficient based on the second parameter and a second predetermined strategy in a case where the current driving condition of the vehicle is a second predetermined condition, and acquire a final adhesion coefficient value by filtering the first adhesion coefficient or the second adhesion coefficient.

The lookup module 300 is configured to acquire current road condition information of the road surface by looking up a predetermined relationship table between a standard road condition adhesion coefficient and road condition information based on the final adhesion coefficient value.

In some embodiments of the present disclosure, the driving data of the vehicle includes at least one of a speed, a front-wheel steering angle, a yaw rate, a lateral/longitudinal acceleration, an engine output torque, a gear position, or a slope signal of the vehicle.

In some embodiments of the present disclosure, the calculation module 200 includes: a first calculation unit, a first fuzzy processing unit, and a second calculation unit.

The first calculation unit is configured to calculate a slip rate and a utilization adhesion coefficient of the road surface based on the driving data of the vehicle.

The first fuzzy processing unit is configured to fuzzify the slip rate and the utilization adhesion coefficient and acquire six first similarity coefficients based on a predetermined fuzzy inference table.

The second calculation unit is configured to calculate the first adhesion coefficient based on the first similarity coefficient.

In some embodiments of the present disclosure, the calculation module 200 includes: a third calculation unit, a second fuzzy processing unit, and a correction unit.

The third calculation unit is configured to calculate an absolute value of a lateral acceleration of the vehicle and an absolute value of a yaw rate deviation of the vehicle based on the driving data of the vehicle.

The second fuzzy processing unit is configured to fuzzify the absolute value of the lateral acceleration and the absolute value of the yaw rate deviation and acquire a second similarity coefficient based on a predetermined fuzzy inference table.

The correction unit is configured to calculate the second adhesion coefficient based on the second similarity coefficient and a predetermined correction formula.

In some embodiments of the present disclosure, the first adhesion coefficient is calculated by:

$$\lambda_{opt} = \left(k_1\lambda_1 + k_2\lambda_2 + k_3\lambda_3 + k_4\lambda_4 + k_5\lambda_5 + k_6\lambda_6\right)/\left(k_1 + k_2 + k_3 + k_4 + k_5 + k_6\right)$$

wherein $\lambda_{opt}$ is the first adhesion coefficient, $k_{1\sim6}$ are first similarity coefficients, and $\lambda_{1\sim6}$ are slip rates.

In some embodiments of the present disclosure, the predetermined correction formula is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k)\left|\gamma\frac{a_y}{g}\right|$$

Wherein, $f(k)$ is a correction function, $k$ is the second similarity coefficient, *a, b, c, d are* correction function coefficients, $\mu$ is the second adhesion coefficient, $\gamma$ is a scale factor taken as 1.19, $a_y$ is the lateral acceleration, and *g* is a gravitational acceleration.

In some embodiments of the present disclosure, the apparatus 10 of identifying road surface information for the vehicle includes: a generation module and a feedback module.

The generation module is configured to generate a prompt signal and/or a feedback signal based on the current road condition information.

The feedback module is configured to receive the prompt signal and/or the feedback signal and feed back the current road condition information of the road surface to a user in acoustic and/or optical form.

It should be noted that the foregoing explanatory description for the embodiments of the method for identifying road surface information for a vehicle is also applicable to the embodiments of the apparatus for identifying road surface information for a vehicle, which will not be repeated herein.

According to the apparatus for identifying road surface information for a vehicle provided by the embodiments of the present disclosure, driving data of the vehicle is acquired and a current driving condition of the vehicle is determined based on the driving data of the vehicle; in the case that the current driving condition of the vehicle is a first predetermined condition, a first parameter of a road surface based on the driving data of the vehicle is calculated and a first adhesion coefficient is calculated based on the first parameter and a first predetermined strategy, or in the case that the current driving condition of the vehicle is a second predetermined condition, a second parameter of the road surface is calculated based on the driving data of the vehicle and a second adhesion coefficient is calculated based on the second parameter and a second predetermined strategy, and a final adhesion coefficient value is acquired by filtering the first adhesion coefficient or the second adhesion coefficient; current road condition information of the road surface is acquired by looking up a predetermined relationship table between a standard road condition adhesion coefficient and road condition information based on the final adhesion coefficient value.

By the method for identifying road surface information for the vehicle provided by embodiments of the present disclosure, there is no need to install additional sensors. Instead, it is only necessary to obtain the driving data of the vehicle through the system inherent in the vehicle to make calculations of the final adhesion coefficient value, thereby saving the hardware costs.

Moreover, when the current driving conditions of the vehicle are different (i.e., the current driving condition of the vehicle may be a first predetermined condition or a second predetermined condition), the corresponding first adhesion coefficient or second adhesion coefficient is obtained by different methods. The methods for calculating the first adhesion coefficient and the second adhesion coefficient are targeted, thereby improving the accuracy of the obtained first adhesion coefficient or the second adhesion coefficient and improving the coverage of the driving conditions.

In summary, while saving hardware costs, the method effectively enhances the identification accuracy of adhesion coefficient and the coverage of driving conditions.

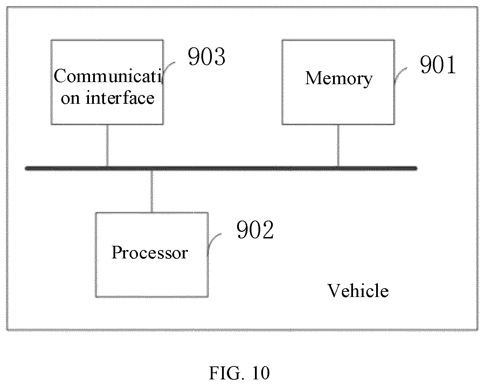

FIG. 10 shows a schematic structural diagram of a vehicle according to some embodiments of the present disclosure. The vehicle includes a memory 901, a processor 902, and a computer program stored on memory 901 and executable on processor 902.

The processor 902, when executing the computer program, is caused to perform the method for identifying the road surface information for the vehicle provided in the above embodiments.

Further, the vehicle further includes a communication interface 903 for communication between the memory 901 and the processor 902.

The memory 901 is used for storing a computer program that is runnable on processor 902.

The memory 901 may include high-speed RAM memory or may also include non-volatile memory, such as at least one disk memory.

In the case that the memory 901, the processor 902, and the communication interface 903 are implemented independently, the communication interface 903, the memory 901, and the processor 902 may be connected to each other and accomplish communication with each other via a bus. The bus may be an industry standard architecture (ISA) bus, a peripheral component (PCI) bus, or an extended industry standard architecture (EISA) bus. Buses may be categorized as address buses, data buses, control buses, etc. For ease of representation, Figure 9 is shown with only one thick line, but it does not mean that there is only one bus or one type of bus.

Optionally, in terms of specific implementation, in the case that the memory 901, the processor 902, and the communication interface 903 are integrated on a single chip, the memory 901, the processor 902, and the communication interface 903 may complete the communication with each other through an internal interface.

The processor 902 may be a central processing unit (CPU), or an application-specific integrated circuit (ASIC), or one or more integrated circuits configured to implement embodiments of the present disclosure.

Embodiments of the present disclosure also provide a computer-readable storage medium having stored thereon a computer program. The computer program, when executed by a processor, causes the processor to perform the method for identifying the road surface information for the vehicle as described above.

In the present specification, reference to the terms "an embodiment," "some embodiments," "examples,", "a specific example," or "some examples," means that the specific features, structures, materials, or characteristics described in conjunction with the embodiment or example are included in at least one embodiment or example of the present disclosure. In the specification, schematic expressions of the above terms are not necessarily directed to the same embodiment or example. Moreover, the specific features, structures, materials, or characteristics described may be combined in one or more embodiments or examples. Additionally, those skilled in the art can combine and integrate the different embodiments or examples and features of different embodiments or examples described in the specification without contradiction.

Furthermore, the terms "first" and "second" are used for descriptive purposes only and should not be construed as indicating or implying relative importance or implicitly specifying the number of indicated technical features. Thus, a feature defined with "first" or "second" may explicitly or implicitly include at least one such feature. In the description of the present application, "N" means at least two, such as two, three, etc., unless explicitly and specifically defined otherwise.

Any process or method description depicted in the flowchart or otherwise described herein may be understood to represent modules, segments, or portions of code including one or more executable instructions for implementing the steps of a specific logic function or process. The scope of the preferred embodiments of the present disclosure includes additional implementations where functions may be executed out of the order shown or discussed, including substantially concurrently or in reverse order based on the functions involved, as would be understood by those skilled in the technical field.

Logic and/or steps represented in flowcharts or described otherwise herein, such as sequences of executable instructions for implementing logical functions, may be embodied in any computer-readable medium for use by or in connection with an instruction execution system, apparatus, or device (e.g., a computer-based system, a system including a processor, or another system that can fetch and execute instructions from an instruction execution system, apparatus, or device). As used in this specification, a "computer-readable medium" may be any device that can contain, store, communicate, propagate, or transport a program for use by or in connection with an instruction execution system, apparatus, or device. More specific examples of computer-readable media (non-exhaustive list) include the following: an electrical connection with one or more wires (electronic device), a portable computer diskette (magnetic device), random access memory (RAM), read-only memory (ROM), erasable programmable read-only memory (EPROM or flash memory), an optical fiber device, and a portable compact disc read-only memory (CD-ROM). Additionally, a computer-readable medium can even print the program on paper or another suitable medium, as the program can be electronically obtained via optical scanning of the paper or other medium, followed by editing, interpretation, or other suitable processing if necessary, and then stored in a computer memory.

It should be understood that various parts of the present application may be implemented by hardware, software, firmware, or a combination thereof. In the above-described embodiments, the steps or methods may be implemented by software or firmware stored in a memory and executed by a suitable instruction execution system. If implemented in hardware, as in another embodiment, they may be implemented by any one or a combination of the following techniques well-known in the art: discrete logic circuits with logic gate circuits for implementing logical functions on data signals, an application-specific integrated circuit (ASIC) with suitable combinational logic gate circuits, a programmable gate array (PGA), a field-programmable gate array (FPGA), etc.

Those of ordinary skill in the technical field may understand that all or part of the steps in the methods of the above embodiments may be implemented by a program that instructs the associated hardware to complete, where the program may be stored in a computer-readable storage medium. When the program is executed, one or a combination of the steps of the method embodiments are performed.

Furthermore, the various functional units in the various embodiments of the present disclosure may be integrated in one processing module, or the individual units may physically exist separately, or two or more units may be integrated in a single module. The integrated modules may be implemented either in the form of hardware or in the form of software functional modules. The integrated module may also be stored in a computer-readable storage medium if it is realized in the form of a software function module and sold or used as a separate product.

The storage medium referred to above may be a read-only memory, a disk or a CD-ROM, and the like. Although embodiments of the present disclosure have been shown and described above, it is to be understood that the above embodiments are exemplary and are not to be construed as a limitation of the present disclosure, and that a person of ordinary skill in the art may make changes, modifications, substitutions, and variations of the above embodiments within the scope of the present disclosure.

**Claims**

1. A method for identifying road surface information for a vehicle, comprising:

   acquiring driving data of the vehicle, and determining a current driving condition of the vehicle based on the driving data of the vehicle;
   in a case where the current driving condition of the vehicle is a first predetermined condition, calculating a first parameter of a road surface based on the driving data of the vehicle and calculating a first adhesion coefficient based on the first parameter and a first predetermined strategy, or in a case where the current driving condition of the vehicle is a second predetermined condition, calculating a second parameter of the road surface based on the driving data of the vehicle and calculating a second adhesion coefficient based on the second parameter and a second predetermined strategy, and acquiring a final adhesion coefficient value by filtering the first adhesion coefficient or the second adhesion coefficient; and
   acquiring current road condition information of the road surface by looking up a predetermined relationship table between a standard road condition adhesion coefficient and road condition information based on the final adhesion coefficient value.

2. The method according to claim 1, wherein the driving data of the vehicle comprises at least one of a vehicle speed, a front-wheel steering angle, a yaw rate, a lateral/longitudinal acceleration, an engine output torque, a gear position, or a slope signal.

3. The method according to claim 1, wherein in the case that the current driving condition of the vehicle is the first predetermined condition, calculating the first parameter of the road surface based on the driving data of the vehicle and calculating the first adhesion coefficient based on the first parameter and the first predetermined strategy comprises:

   calculating a slip rate and a utilization adhesion coefficient of the road surface based on the driving data of the vehicle;
   fuzzifying the slip rate and the utilization adhesion coefficient and acquiring six first similarity coefficients based on a predetermined fuzzy inference table; and
   calculating the first adhesion coefficient based on the first similarity coefficients.

4. The method according to claim 1, wherein in the case where the current driving condition of the vehicle is the second predetermined condition, calculating the second parameter of the road surface based on the driving data of the vehicle and calculating the second adhesion coefficient based on the second parameter and the second predetermined strategy comprises:

   calculating an absolute value of a lateral acceleration of the vehicle and an absolute value of a yaw rate deviation of the vehicle based on the driving data of the vehicle;
   fuzzifying the absolute value of the lateral acceleration and the absolute value of the yaw rate deviation and acquiring a second similarity coefficient based on a predetermined fuzzy inference table; and
   calculating the second adhesion coefficient based on the second similarity coefficient and a predetermined correction formula.

5. The method according to claim 3, wherein the first adhesion coefficient is calculated by:

$$\lambda_{opt} = \left(k_1\lambda_1 + k_2\lambda_2 + k_3\lambda_3 + k_4\lambda_4 + k_5\lambda_5 + k_6\lambda_6\right)/\left(k_1 + k_2 + k_3 + k_4 + k_5 + k_6\right)$$

Wherein $\lambda_{opt}$ represents the first adhesion coefficient, $k_{1\sim6}$ represent the first similarity coefficients, and $\lambda_{1\sim6}$ represent slip rates.

6. The method according to claim 4, wherein the predetermined correction formula is as follows:

$$f(k) = \begin{cases} 1 & k \geqslant n_1 \\ ak + b & n_2 \leqslant k < n_1 \\ e^{ck+d} & n_3 \leqslant k < n_2 \end{cases}$$

$$\mu = f(k)\left|\gamma\frac{a_y}{g}\right|$$

wherein $f(k)$ represents a correction function, $k$ represents the second similarity coefficient, $a, b, c, d$ represent correction function coefficients, $\mu$ represents the second adhesion coefficient, $\gamma$ represents a scale factor taken as 1.19, $a_y$ represents the lateral acceleration, and $g$ represents a gravitational acceleration.

7. The method according to claim 1, wherein subsequent to acquiring the current road condition information of the road surface by looking up the predetermined relationship table between the standard road condition adhesion coefficient and the road condition information based on the final adhesion coefficient value, the method further comprises:

   generating a prompt signal and/or a feedback signal based on the current road condition information; and
   receiving the prompt signal and/or the feedback signal and feeding back the current road condition information of the road surface to a user in acoustic and/or optical form.

8. An apparatus for identifying road surface information for a vehicle, comprising:

   an acquisition module, configured to acquire driving data of the vehicle and determine a current driving condition of the vehicle based on the driving data of the vehicle;
   a calculation module, configured to calculate a first parameter of a road surface based on the driving data of the vehicle and calculate a first adhesion coefficient based on the first parameter and a first predetermined strategy in a case where the current driving condition of the vehicle is a first predetermined condition, and calculate a second parameter of the road surface based on the driving data of the vehicle and calculate a second adhesion coefficient based on the second parameter and a second predetermined strategy in a case where the current driving condition of the vehicle is a second predetermined condition, and acquire a final adhesion coefficient value by filtering the first adhesion coefficient or the second adhesion coefficient, and
   a lookup module, configured to acquire current road condition information of the road surface by looking up a predetermined relationship table between a standard road condition adhesion coefficient and road condition information based on the final adhesion coefficient value.

9. A vehicle, comprising: a memory, a processor, and a computer program stored on the memory and executable on the processor, wherein the processor, when executing the computer program, is caused to perform the method for identifying the road surface information for the vehicle as defined in any one of claims 1 to 7.

10. A computer-readable storage medium storing a computer program thereon, wherein the computer program, when run by a processor, causes the processor to perform the method for identifying the road surface information for the vehicle as defined in any one of claims 1 to 7.

Acquiring driving data of the vehicle and determining current driving condition of the vehicle based on the driving data of the vehicle — S101

In the case that the current driving condition of the vehicle is a first predetermined condition, calculating a first parameter of a road surface based on the driving data of the vehicle and calculating a first adhesion coefficient based on the first parameter and a first predetermined strategy, or in the case that the current driving condition of the vehicle is a second predetermined condition, calculating a second parameter of the road surface based on the driving data of the vehicle and calculating a second adhesion coefficient based on the second parameter and a second predetermined strategy, and acquiring a final adhesion coefficient value by filtering the first adhesion coefficient or the second adhesion coefficient — S102

Acquiring current road condition information of the road surface by looking up a predetermined relationship table between a standard road condition adhesion coefficient and road condition information based on the final adhesion coefficient value — S103

FIG. 1

FIG. 2

FIG. 3

FIG. 4

| Rule | Input | | Output six similarity coefficients | | | | | |
|------|-------|-------|-----|------|------------------|-------------|-----------|-------------|
| | λ | μ | Ice | Snow | Wet cobblestone | Wet asphalt | Dry cement | Dry asphalt |
| 1 | Small | Ice | S | CS | DS | DS | DS | DS |
| 2 | Small | Snow | CS | VS | NS | DS | DS | DS |
| 3 | Small | Wet cobblestone | DS | CS | S | DS | DS | DS |
| 4 | Small | Wet asphalt | DS | DS | NS | S | CS | DS |
| 5 | Small | Dry cement | DS | DS | DS | CS | S | CS |
| 6 | Small | Dry asphalt | DS | DS | DS | NS | CS | S |
| 7 | Large | Ice | VS | S | NS | DS | DS | DS |
| 8 | Large | Snow | S | VS | NS | DS | DS | DS |
| 9 | Large | Wet cobblestone | DS | NS | VS | DS | DS | DS |
| 10 | Large | Wet asphalt | DS | DS | DS | VS | S | CS |
| 11 | Large | Dry cement | DS | DS | DS | NS | VS | S |
| 12 | Large | Dry asphalt | DS | DS | DS | NS | S | VS |

FIG. 5

FIG. 6

FIG. 7

Start

Input $\lambda_i$

$\lambda_i - \lambda_{initial} \geq \triangle\lambda_1$ — N

Y

a=0
b=b+1

b>m — N

Keep $\lambda_{initial}$

Y

a,b=0
$\lambda_{initial} = \lambda_i$ ← Y

Output $\lambda_{initial}$

b=0

$\lambda_{initial} - \lambda_i \geq \triangle\lambda_2$ — N

Y

a=a+1

a>n — N

Keep $\lambda_{initial}$

End

FIG. 8

Acquisition module — 100    Calculation module — 200    Lookup module — 300    10

Apparatus for identifying road surface information for a vehicle

FIG. 9

FIG. 10

## INTERNATIONAL SEARCH REPORT

| International application No. |
|---|
| **PCT/CN2024/092712** |

| A. | CLASSIFICATION OF SUBJECT MATTER |
|---|---|
| | B60W40/064(2012.01)i |

According to International Patent Classification (IPC) or to both national classification and IPC

| B. | FIELDS SEARCHED |
|---|---|

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, CNABS, ENTXTC, VEN: 奇瑞, 滑转率, 滑移率, 利用附着系数, 侧向加速度, 横向加速度, 横摆角速率, 横摆率, 差, 附着系数, 附着因数, 附着因子, 粘附系数, 粘附因数, 粘附因子, 抓地, 得到, 估测, 估计, 估算, 估值, 获得, 获取, 计算, 推测, 推定, 近似, 类似, 相近, 模糊, 鹅卵石, 沥青, adherence, adhesion, grip, coefficient, factor, yaw rate, lateral acceleration, slip, ratio

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116572967 A (CHERY AUTOMOBILE CO., LTD.) 11 August 2023 (2023-08-11) description, paragraphs 47-144, and figures 1-9 | 1-10 |
| X | CN 111762172 A (JIANGXI UNIVERSITY OF SCIENCE AND TECHNOLOGY) 13 October 2020 (2020-10-13) description, paragraphs 14-75, and figures 1-2 | 1, 2, 7-10 |
| Y | CN 111762172 A (JIANGXI UNIVERSITY OF SCIENCE AND TECHNOLOGY) 13 October 2020 (2020-10-13) description, paragraphs 14-75, and figures 1-2 | 3, 5 |
| X | CN 103754218 A (TONGJI UNIVERSITY) 30 April 2014 (2014-04-30) description, paragraphs 53-82, and figures 1-2 | 1, 2, 7-10 |
| Y | CN 106585425 A (XI'AN JIAOTONG UNIVERSITY) 26 April 2017 (2017-04-26) description, paragraphs 36-127, and figures 1-2 | 3, 5 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 July 2024** | **02 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/092712** |

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107117073 A (UNIVERSITY OF ELECTRONIC SCIENCE AND TECHNOLOGY OF CHINA) 01 September 2017 (2017-09-01)<br>description, paragraphs 55-85, and figures 1-5 | 3, 5 |
| Y | CN 114371691 A (NANJING UNIVERSITY OF AERONAUTICS AND ASTRONAUTICS) 19 April 2022 (2022-04-19)<br>description, paragraphs 96-115, and figures 1-3 | 3, 5 |
| A | US 2003130782 A1 (DELPHI TECHNOLOGIES INC.) 10 July 2003 (2003-07-10)<br>entire document | 1-10 |
| A | US 5931887 A (GENERAL MOTORS CORP.) 03 August 1999 (1999-08-03)<br>entire document | 1-10 |

Form PCT/ISA/210 (second sheet) (July 2022)

**INTERNATIONAL SEARCH REPORT**
Information on patent family members

International application No.

**PCT/CN2024/092712**

| Patent document cited in search report | | | Publication date (day/month/year) | Patent family member(s) | | | Publication date (day/month/year) |
|---|---|---|---|---|---|---|---|
| CN | 116572967 | A | 11 August 2023 | None | | | |
| CN | 111762172 | A | 13 October 2020 | None | | | |
| CN | 103754218 | A | 30 April 2014 | None | | | |
| CN | 106585425 | A | 26 April 2017 | None | | | |
| CN | 107117073 | A | 01 September 2017 | None | | | |
| CN | 114371691 | A | 19 April 2022 | None | | | |
| US | 2003130782 | A1 | 10 July 2003 | US | 6591179 | B1 | 08 July 2003 |
| US | 5931887 | A | 03 August 1999 | None | | | |

Form PCT/ISA/210 (patent family annex) (July 2022)

**REFERENCES CITED IN THE DESCRIPTION**

**Patent documents cited in the description**

- CN 202310573560